# EUROPÄISCHE PATENTSCHRIFT

(11) **EP 1 916 180 B1**
(45) Veröffentlichungstag und Bekanntmachung des Hinweises auf die Patenterteilung: **05.01.2011**
(21) Anmeldenummer: 07014852.3
(22) Anmeldetag: 28.07.2007
(51) Int. Cl.: B62D 47/02, B62D 53/00

(54) **Gelenk zwischen zwei gelenkig miteinander verbundenen Fahrzeugteilen, z. B. eines Gelenkfahrzeugs**
Coupling between two articulated vehicle parts, e.g. for an articulated vehicle
Dispositif d'attelage entre deux éléments de véhicule articulés, par exemple d'un véhicule articulé

(30) Priorität: 25.10.2006 DE 102006050210
(43) Veröffentlichungstag der Anmeldung: 30.04.2008
(73) Patentinhaber: Hübner GmbH, 34123 Kassel (DE)
(72) Erfinder: Koch, Robert, 37242 Bad Sooden-Allendorf (DE); Scharf, Lothar, 37242 Bad Sooden-Allendorf (DE)
(74) Vertreter: Walther, Walther & Hinz GbR

(56) Entgegenhaltungen:
- EP-A- 0 562 598
- EP-A- 1 245 468
- EP-A- 1 864 834
- DE-U1- 29 707 031
- US-A1- 2006 138 746

## Beschreibung

Die vorliegende Erfindung betrifft ein Gelenk zwischen zwei gelenkig miteinander verbundenen Fahrzeugteilen, z. B. eines Gelenkfahrzeugs, umfassend ein Knickgelenk, wobei das Knickgelenk durch eine Gelenkanordnung zur Übertragung von Nick- und Wankbewegungen mit dem einen Fahrzeugteil verbunden ist, wobei das Knickgelenk zwei Gelenksegmente umfasst, die um eine vertikale Achse drehbar miteinander verbunden sind, wobei das eine Gelenksegment durch die Gelenkanordnung mit dem einen Fahrzeugteil verbunden ist, wobei die Gelenkanordnung einen Wankgelenkkörper umfasst, wobei der Wankgelenkkörper innerhalb eines Nickkörpers lagert, der in einer Gehäusehülse um die Nickachse drehbar insgesamt gelagert ist, wobei die Gehäusehülse an dem einen Gelenksegment angeordnet ist, und wobei der Wankgelenkkörper von dem einen Fahrzeugteil aufgenommen wird.

Ein aus mehreren Teilen kuppelbares Gelenkfahrzeug ist aus dem Stand der Technik hinreichend bekannt. Die Teile eines solchen Gelenkfahrzeuges sind durch eine Gelenkverbindung miteinander gekuppelt. Die Gelenkverbindung wird durch einen Balg überspannt, wobei zum Hinüberwechseln von Personen von dem einen zu dem anderen Fahrzeugteil eine Übergangsbrücke vorgesehen ist.

Bekanntermaßen werden Gelenkzüge den verschiedensten Bewegungsarten unterworfen. So müssen die Gelenke in der Lage sein, sowohl Wank-, Nick- als auch Knickbewegungen aufzunehmen. Der Begriff des Gelenks umfasst im vorliegenden Fall die gesamte Anordnung zwischen den beiden Fahrzeugteilen. Unter Wankbewegungen versteht man solche Bewegungen, bei denen sich die beiden Fahrzeugteile relativ zueinander um die Längsachse verdrehen, Knickbewegungen sind solche, die auftreten, wenn der Gelenkzug mit den beiden Fahrzeugteilen um eine Kurve fährt, wohingegen Nickbewegungen entstehen, wenn ein solcher Gelenkzug durch eine Senke oder über eine Kuppe fährt. Zum Durchfahren von Kurven und z. B. zum Durchfahren von Senken weist eine bekannte Gelenkverbindung zwischen den Fahrzeugteilen ein Knick- und ein Nickgelenk auf. Bei dem Nickgelenk handelt es sich um ein solches, das eine Bewegung der beiden Fahrzeugteile relativ zueinander um eine Achse quer zur Längsachse des Fahrzeugs ermöglicht. Üblicherweise sind die hierbei vorgesehenen Nicklager als Metallgummilager ausgebildet.

Bislang ist man davon ausgegangen, dass auf Grund der Eigenelastizität der Chassis der jeweiligen Fahrzeugteile die Wankbewegungen von den Chassis selbst aufgenommen werden. Zu dieser Annahme bestand insbesondere deshalb Veranlassung, weil die Wankwinkel maximal 10 Grad, üblicherweise jedoch nur zwischen 5 und 7 Grad betrugen. Es hat sich allerdings zwischenzeitlich herausgestellt, dass selbst bei solchen verhältnismäßig geringen Wankwinkeln Momente von bis zu 30 KNm auf das Gelenk bzw. auch auf das Chassis wirken. Insofern sind Beschädigungen am Chassis und/oder am Gelenk nicht auszuschließen. Insbesondere auch das Knickgelenk, das für einen Gelenkzug die Möglichkeit eröffnet Kurven zu durchfahren, ist sehr starken Belastungen ausgesetzt. Dies spiegelt sich darin wieder, dass im Bereich des Knickgelenkes Wälzlager erheblicher Dimensionen eingebaut werden müssen, die schlussendlich nicht nur die Aufsattellasten zwischen den Wagenteilen übertragen, sondern darüber hinaus auch in der Lage sind, bei den bereits erläuterten Wankbewegungen die entsprechenden auftretenden Kräfte zu übertragen.

In diesem Zusammenhang sind in Bezug auf die Lagerung bereits bestimmte Lager bekannt, die sowohl eine Bewegung in Richtung der Nickachse als auch in Richtung der Wankachse zulassen.

So ist aus dem DE 298 03 504 U1 ein Gelenk bekannt, bei dem die Gelenkglieder im Bereich ihrer Verbindung elastisch nachgiebig gegeneinander abstützbar miteinander verbunden sind. Die elastische nachgiebige Verbindung erfolgt durch ein sogenanntes elastisches Schichtlager, das mehrere Schichten aus einem elastischen Werkstoff aufweist, zwischen denen allerdings auch Einlagen aus steiferem Material angeordnet sind. Dieses Lager lässt insbesondere bereits Nickbewegungen zu, jedoch ist der Winkel, um den Nick- und Wankbewegungen zugelassen werden, so gering, dass bei Fahrbewegungen, die einen höheren Nickoder Wankwinkel erfordern, immer noch eine erhebliche Belastung auf die Chassis der Fahrzeuge ausgeübt wird.

Des Weiteren ist aus der DE 32 08 615 A1 ein Gelenkbus bekannt, der sowohl Wankbewegungen als auch Nickbewegungen zulässt. Sowohl zur Übertragung der Nick- als auch der Wankbewegung sind hierbei sogenannte Gummi-Metalllager vorgesehen, die zu beiden Seiten des Knickgelenks angeordnet sind und die die Achsstummel des Gelenkteiles des einen Fahrzeugs aufnehmen. Auch hier gilt, dass die Kräfte insbesondere bei starken Wankbewegungen, die auf die Fahrzeugchassis ausgeübt werden, erheblich sind.

Ein ähnliches Lager, wie die zuvor abgehandelte DE 32 08 615 A1 zeigt auch die DE 42 35 493 A1. Allerdings ist hier durch geeignete Maßnahmen die Steifigkeit des Gummi-Metalllagers veränderbar.

Bei der Gelenkanordnung gemäß der DE 42 31 323 A1 ist ein Knickgelenk vorgesehen, wobei das Knickgelenk ebenfalls über zwei Gummi-Metalllager an dem einen Fahrzeugchassis angelenkt ist. Wankbewegungen sind hierbei nur im Rahmen der Elastizität der Gummi-Metalllager für sowohl Wank- als auch Nickbewegungen übertragbar, allerdings ist auch hier die Übertragung entsprechender Nick- und Wankbewegungen, und hier insbesondere entsprechender Nickbewegungen konstruktionsbedingt durch die Ausbildung der Gummi-Metalllager begrenzt. Insbesondere gilt dies für aufzunehmende Wankbewegungen, da zwei derartige Gummi-Metalllager zu beiden Seiten der Mittellängsachse des Fahrzeugs vorgesehen sind.

Aus der EP 1 864 834 A1, die nachveröffentlicht ist, ist insbesondere aus Figur 7 und Figur 8 ein Nickgelenk und ein Wankgelenk erkennbar, die zur Zulassung der entsprechenden Nick- und Wankbewegungen aus gesonderten Teilen bestehen. Hierbei ist ein sogenanntes Drehglied vorgesehen, das in einem Wankgelenkgehäuse gelagert ist. Dieses Wankgelenkgehäuse besitzt gesonderte Nickachsstummel, die durch das Nicklager aufgenommen werden, was aus den beiden Manschetten gebildet wird. Hieraus wird deutlich, dass das Wankgelenk einerseits und das Nickgelenk andererseits zwei räumlich getrennte Lagerstellen bilden. Nachteilig an dieser Ausgestaltung ist, dass eine solche Gelenkanordnung lang baut, was den Einsatzbereich einschränkt.

Um nun die Chassis und auch das Gelenk von derartig durch Wankbewegungen hervorgerufenen Kräften zu entlasten, und um die Nickbewegung gedämpft erfolgen zu lassen, wird erfindungsgemäß vorgeschlagen, dass der Nickkörper auf seinem Umfang verteilt Elastomerkörper aufweist, mit denen der Nickkörper in der Gehäusehülse verspannt ist.

Dadurch, dass der Nickkörper auf seinem Umfang verteilt Elastomerkörper aufweist, mit denen der Nickkörper in der Gehäusehülse verspannt ist, wird die Nickbewegung gedämpft. Wird demzufolge die Ausführung von Nickbewegungen erforderlich, weil z. B. die beiden Fahrzeugteile über eine Kuppe fahren, dann erfolgt die Ausführung der Nickbewegungen gegen die Kraft der Elastomerkörper. Um einen sicheren Sitz der Elastomerkörper auf dem Nickkörper zu gewährleisten, weist der Nickkörper über einen Teil seines äußeren Umfanges eine eckige Ausbildung, insbesondere eine viereckige Ausbildung auf. Um des Weiteren die Verformung der Elastomerkörper zu ermöglichen, sind die Elastomerkörper in tangentialer Richtung beabstandet zueinander auf dem Nickkörper angeordnet.

Dadurch, dass durch die Gelenkanordnung nunmehr die Übertragung von Nick- und insbesondere von größeren Wankbewegungen möglich ist, können sowohl die Belastungen auf die Chassis der beiden Fahrzeugteile als auch auf das Gelenk vermindert werden. Insofern können bei dem Knickgelenk kleinere und weniger aufwändige Lager, z. B. Gleitlager, eingesetzt werden, da das Knickgelenk in diesem Fall im Wesentlichen ausschließlich die Aufsattellast zu tragen hat. Auch die Kräfte auf das Nicklager vermindern sich, da - wie bereits ausgeführt - bei Wankbewegungen ohnehin auch immer das Nicklager mit belastet wird. Hieraus wird weiterhin deutlich, dass sowohl die Übertragung der Nick- als auch der Wankbewegungen durch zwei ineinander gelagerte Körper erfolgt, die in einer Hülse angeordnet sind, wobei die Hülse an dem einen Fahrzeugteil oder Chassis befestigt ist. Eine solche Gelenkanordnung baut äußerst kurz, weshalb auch ein solchermaßen aufgebautes Gelenk sehr kurz baut.

Weitere vorteilhafte Ausführungsformen und Merkmale der Ausführungsformen sind den Unteransprüchen zu entnehmen.

Das eine Gelenksegment ist im vorliegenden Fall nach Art eines dreieckförmigen Flügels ausgebildet und weist seitliche Dämpfer zur Verbindung mit dem Chassis des anderen Fahrzeugteils auf. Durch diese Dämpfer kann die Knickbewegung des Gelenkfahrzeugs gedämpft erfolgen, was im Extremfall bedeutet, dass das Gelenk an sich durch die Dämpfer völlig starr wird.

Der Wankgelenkkörper ist in dem Nickkörper der Gelenkachse des Fahrzeugs schwenkbar gelagert. Insofern ist vorgesehen, dass der Wankgelenkkörper auf seiner Ober- und Unterseite gewölbt ist, und zwar in Querrichtung des Fahrzeugs gewölbt ausgebildet ist, wobei, um eine gedämpfte Wankbewegung zu ermöglichen, der Wankgelenkkörper auf seiner gewölbten Ober- und Unterseite jeweils ein Elastomerkissen aufweist. Das heißt, die Wankbewegung erfolgt gegen die Kraft der beiden Elastomerkissen.

Der Wankgelenkkörper besitzt auf seiner Vorder- und Rückseite, also in Richtung der Fahrzeuglängsachse, eine zylindrische Ausbildung mit einer ebenen Oberfläche, mit der der Wankgelenkkörper an der Innenwandung des Nickkörpers über eine dünne Gleitschicht anliegt. Der Grund hierfür ist darin zu finden, dass quer zur Fahrtrichtung keine Bewegung zugelassen werden soll, um die Fahreigenschaften nicht negativ zu beeinflussen.

Zur Verbindung der Gelenkanordnung mit dem Chassis ist vorgesehen, dass der Wankgelenkkörper seitliche Achsstummel besitzt, die der Verbindung mit dem einen Fahrzeugteil oder Chassis dienen. Durch die Gehäusehülse ist die Gelenkanordnung mit einem Gelenksegment des Knickgelenkes verbunden.

Anhand der Zeichnungen wird die Erfindung nachstehend beispielhaft näher erläutert.
- Fig. 1: zeigt einen Gelenkbus, schematisch in einer Seitenansicht;
- Fig. 2: zeigt das Gelenk in perspektivischer Darstellung;
- Fig. 3: zeigt eine kombinierte Nick- und Wankgelenkanordnung gemäß Fig. 2 in einer Explosionsdarstellung;
- Fig. 4a-4c: zeigen Schnittdarstellungen des Gelenkanordnung gemäß Fig. 3.;

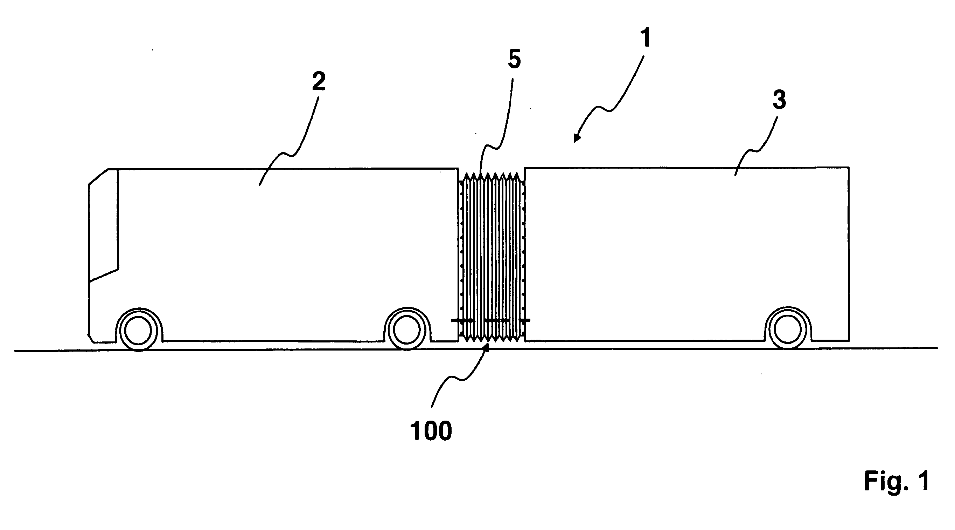

Gemäß der Fig. 1 weist der insgesamt mit 1 bezeichnete Gelenkbus die beiden Fahrzeugteile 2 und 3 auf, die durch einen Gelenk 100 miteinander verbunden sind. Um Personen das Hinüberwechseln von einem Fahrzeugteil in das andere Fahrzeugteil zu ermöglichen, ist über dem Gelenk eine Übergangsbrücke angeordnet (nicht dargestellt), wobei sowohl die Übergangsbrücke als auch das Gelenk von einem im Querschnitt U-förmig ausgebildeten Balg 5 umspannt werden.

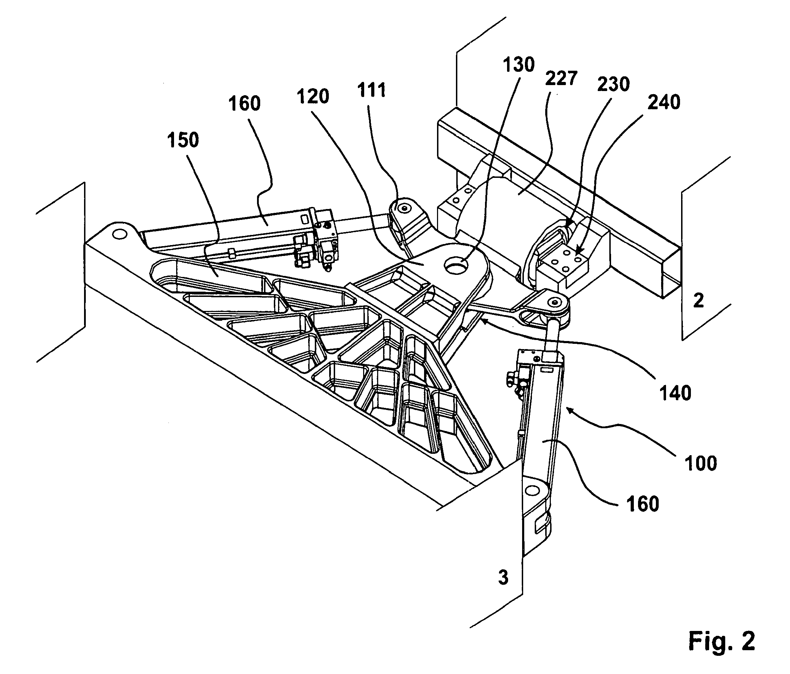

Das insgesamt mit 100 bezeichnete Gelenk der ersten Ausführungsform (Fig. 2) umfasst die beiden Gelenksegmente 110, 120, die durch eine vertikale Achse 130 zur Bildung des Knickgelenkes 140 miteinander verbunden sind. Das Gelenksegment 120 ist hierbei an einem Rahmen 150 angelenkt, der wiederum mit dem hinteren Fahrzeugteil 3 verbunden ist. Das Gelenksegment 111, das über seitlich abgehende Dämpfungselemente 160 durch den Rahmen 150 mit dem Fahrzeug 3 verbunden ist, weist eine zylindrische Gehäusehülse 227 auf, wobei der Nickkörper 230 in der Gehäusehülse 227 drehbar eingespannt gelagert ist.

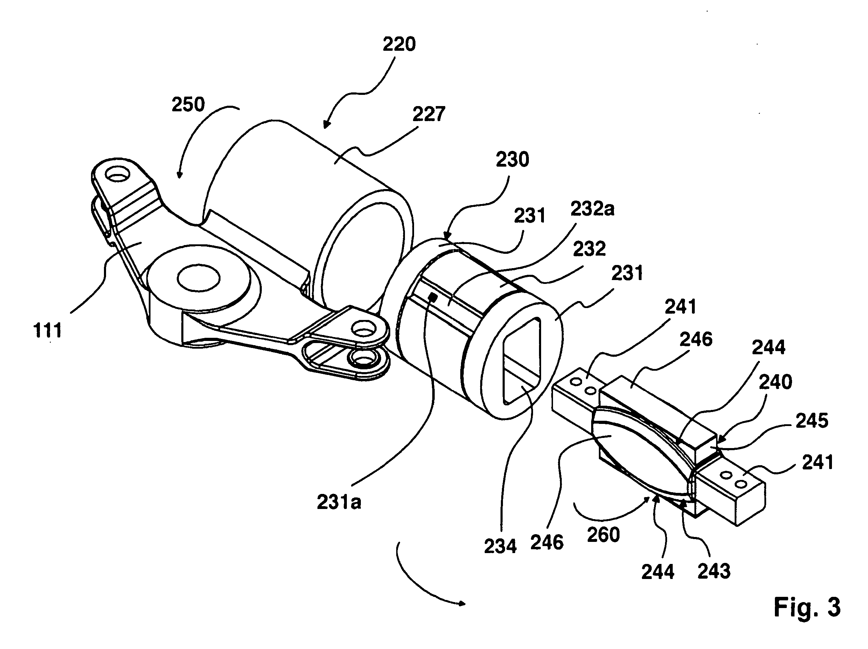

Hierbei nimmt der Nickkörper 230 den Wankgelenkkörper 240 auf (Fig. 3).

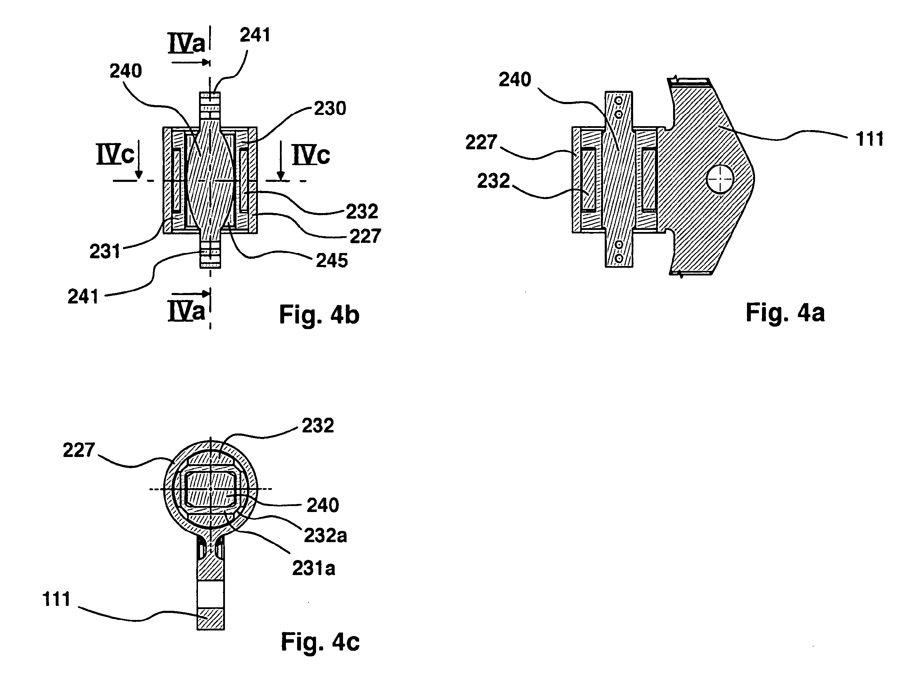

Die Ausbildung des Nickkörpers wird nun im Folgenden anhand der Fig. 3, aber auch anhand der Fig. 4a-4c erläutert. Der Nickkörper 230 besitzt drei Abschnitte, und zwar jeweils einen endseitig angeordneten Kranz 231, der auf seiner Oberseite kreisrund ausgebildet ist. Zwischen den beiden Kränzen 231 befindet sich ein Abschnitt 231 a, der nach Art eines Vierkants ausgebildet ist (Fig. 4c). Auf den Flächen des Vierkants befinden sich die Elastomerkörper 232, die eine entsprechend dem Kranz 231 gewölbte Oberfläche aufweisen, so dass der gesamte Nickkörper ein im Wesentlichen zylindrisches Aussehen erhält. Zwischen den einzelnen Elastomerkörpern 232 befinden sich allerdings Abstände 232a, die folgende Funktion haben:
Durch die Elastomerkörper 232 ist der Nickkörper 230 in der Gehäusehülse 227 verspannt und damit fixiert. Das heißt, dass die Nickbewegung gegen die Kraft der Elastomerkörper 232 erfolgt, was weiterhin bedeutet, dass sich bei einer Nickbewegung die Elastomerkörper tangential bewegen, so dass die Nickbewegung des Nickkörpers gedämpft erfolgt. Hieraus wird aber auch deutlich, dass die Größe der Nickbewegung abhängig ist von der Elastizität der Elastomerkörper und deren Vorspannung in dem Gehäuse 227. Das heißt, der Nickkörper 230 ist gegen die Kraft der Einspannung der Elastomerkörper 232 in der Gehäusehülse 227 eingespannt, aber in gewissem Umfang drehbar gelagert.

Der Nickkörper 230 weist eine rechteckförmige Öffnung 234 auf, die der Aufnahme des Wankgelenkkörpers 240 dient. Der Wankgelenkkörper 240 zeigt zwei Achsstummel 241, die der Fixierung der Gelenkanordnung 220 an dem Chassis 2 des Fahrzeugs dienen. Zwischen den beiden Achsstummeln 241 ist der Gelenkkörper nach Art einer abgeflachten Olive ausgebildet (Pfeil 243), wobei dieser olivenförmige Grundkörper 243 des Gelenkkörpers 240 eine in vertikaler Richtung gewölbte Ober- und Unterseite 244 besitzt, wobei auf dieser Ober- und Unterseite jeweils ein Elastomerkissen 245 vorgesehen ist, das eine Wankbewegung, d. h. eine Bewegung in Richtung des Pfeils 260 des Gelenkkörpers in dem Nickkörper 230 ermöglicht. Die abgeflachte Ausbauchung 246 des olivenförmige Grundkörpers besteht im Wesentlichen aus dem gleichen Material wie der olivenförmige Grundkörper selbst, nämlich aus Metall Mit dieser Ausbauchung 246 liegt der Gelenkkörper 240 an den vertikalen Flächen der Öffnung 234 des Nickkörpers 230 an. Durch die im Wesentlichen starre Ausbildung der Ausbauchung 246 in Verbindung mit dem ebenfalls starr ausgebildeten olivenförmigen Grundkörper 243 wird erreicht, dass bei Schub- und Druckbewegungen diese Bewegungen im Wesentlichen schlupffrei von dem einen Chassis über das Gelenk auf das andere Chassis übertragen werden können. Lediglich die Nickbewegung ist gedämpft, wobei insofern auf die bereits erwähnte Anordnung der Elastomerkörper 232 in dem Nickkörper 230 hingewiesen wird, wobei die Elastomerkörper vorgespannt durch das Gehäuse 227 der Gelenkanordnung 220 aufgenommen sind. Für die Wankbewegungen ist im Wesentlichen verantwortlich der nach Art einer Olive ausgebildete Grundkörper 243 mit den Elastomerkissen 245 und deren Anordnung in der Öffnung 234 des Nickkörpers 230. Das heißt, dass mit dieser Gelenkanordnung sowohl Nick- als auch Wankbewegungen und durch die Verbindung der beiden Gelenksegmente auch die erforderlichen Knickbewegungen ausgeführt werden können.

## Patentansprüche

1. Gelenk (100) zwischen zwei gelenkig miteinander verbundenen Fahrzeugteilen (2, 3), z. B. eines Gelenkfahrzeugs, umfassend ein Knickgelenk, wobei das Knickgelenk durch eine Gelenkanordnung (220) zur Übertragung von Nick- und Wankbewegungen mit dem einen Fahrzeugteil (2, 3) verbunden ist, wobei das Knickgelenk (140) zwei Gelenksegmente (111, 120) umfasst, die um eine vertikale Achse drehbar miteinander verbunden sind, wobei das eine Gelenksegment durch die Gelenkanordnung (220) mit dem einen Fahrzeugteil (2, 3) verbunden ist, wobei die Gelenkanordnung (220) einen Wankgelenkkörper (240) umfasst, wobei der Wankgelenkkörper (240) innerhalb eines Nickkörpers (230) lagert, der in einer Gehäusehülse (227) um die Nickachse drehbar insgesamt gelagert ist, wobei die Gehäusehülse (227) an dem einen Gelenksegment (111) angeordnet ist, und wobei der Wankgelenkkörper (240) von dem einen Fahrzeugteil aufgenommen wird,
**dadurch gekennzeichnet,**
**dass** der Nickkörper (230) auf seinem Umfang verteilt Elastomerkörper (232) aufweist, mit denen der Nickkörper (230) in der Gehäusehülse (227) verspannt ist.

2. Gelenk nach Anspruch 1,
**dadurch gekennzeichnet,**
**dass** in der Gehäusehülse (227) der Nickkörper (230) drehbar angeordnet ist, wobei der Nickkörper (230) den Wankgelenkkörper (240) um die Fahrzeuglängsachse schwenkbar aufnimmt.

3. Gelenk nach einem der voranstehenden Ansprüche,
**dadurch gekennzeichnet,**
**dass** der Nickkörper (230) über einen Teil seines äußeren Umfanges zur Aufnahme der Elastomerkörper (232) eckig ausgebildet ist.

4. Gelenk nach einem der voranstehenden Ansprüche,
**dadurch gekennzeichnet,**
**dass** die Elastomerkörper (232) in tangentialer Richtung einen Abstand (232a) zueinander aufweisen.

5. Gelenk nach einem der voranstehenden Ansprüche,
**dadurch gekennzeichnet,**
**dass** der Wankgelenkkörper (240) auf seiner Ober- und Unterseite gewölbt ausgebildet ist.

6. Gelenk nach Anspruch 5,
**dadurch gekennzeichnet,**
**dass** der Wankgelenkkörper (240) auf seiner gewölbten Ober- und Unterseite ein Elastomerkissen (245) aufweist, so dass die Wankbewegung des Wankgelenkkörpers (240) um die Längsachse gedämpft erfolgt.

7. Gelenk nach einem der voranstehenden Ansprüche,
**dadurch gekennzeichnet,**
**dass** der Wankgelenkkörper (240) auf seiner Vorder- und Rückseite eine Ausbauchung (246) mit ebener Oberfläche aufweist, mit der der Wankgelenkkörper (240) an der Innenwandung des Nickkörpers (230) anliegt.

8. Gelenk nach einem der voranstehenden Ansprüche,
**dadurch gekennzeichnet,**
**dass** der Wankgelenkkörper (240) seitliche Achsstummel (241) zur Verbindung mit einen Fahrzeugteil (2) aufweist.

## Claims

1. Joint (100) between two pivotably interconnected vehicle parts (2, 3), for example an articulated vehicle, comprising an articulation joint, wherein the articulation joint is connected with one vehicle part (2, 3) by a joint arrangement (220) for transmission of pitching and rolling movements, wherein the articulation joint (140) comprises two joint segments (111, 120) connected together to be rotatable about a vertical axis, wherein one joint segment is connected by the joint arrangement (220) with the one vehicle part (2, 3), wherein the joint arrangement (220) comprises a rolling joint body (240), wherein the rolling joint body (240) is mounted within a pitch body (230) mounted in a housing sleeve (227) to be rotatable as a whole about the pitch axis, wherein the housing sleeve (227) is arranged at the one joint segment (111) and wherein the rolling joint body (240) is received by the one vehicle part, **characterised in that** the pitch body (230) has elastomeric bodies (232) which are distributed on its circumference and by which the pitch body (230) is braced in the housing sleeve (227).

2. Joint according to claim 1, **characterised in that** the pitch body (230) is rotatably arranged in the housing sleeve (227), wherein the pitch body (230) receives the rolling joint body (240) to be pivotable about the vehicle longitudinal axis.

3. Joint according to one of the preceding claims, **characterised in that** the pitch body (230) is formed polygonally over a part of its outer circumference for reception of the elastomeric bodies (232).

4. Joint according to any one of the preceding claims, **characterised in that** the elastomeric bodies (232) have a spacing (232a) from one another in tangential direction.

5. Joint according to any one of the preceding claims, **characterised in that** the rolling joint body (240) is formed to be curved on its upper side and lower side.

6. Joint according to claim 5, **characterised in that** the rolling joint body (240) has an elastomeric cushion (245) on its curved upper side and lower side so that the rolling movement of the rolling joint body (240) about the longitudinal axis is damped.

7. Joint according to any one of the preceding claims, **characterised in that** the rolling joint body (240) has on its front side and rear side a bulge (246) with a flat surface, by which the rolling joint body (240) bears against the inner wall of the pitch body (230).

8. Joint according to any one of the preceding claims, **characterised in that** the rolling joint body (240) has lateral axle stubs (241) for connection with one vehicle part (2).

## Revendications

1. Articulation (100) entre deux parties de véhicule (2, 3) reliées entre elles de façon articulée, par exemple entre deux parties d'un véhicule articulé, comprenant une articulation de courbure, dans laquelle l'articulation de courbure est reliée à l'une des parties de véhicule (2, 3) par un dispositif d'articulation (220) prévu pour la transmission de mouvements de tangage et de roulis, dans laquelle l'articulation de tangage (140) comprend deux segments d'articulation (111, 120) qui sont reliés entre eux avec possibilité de rotation autour d'un axe vertical, l'un des segments d'articulation étant relié à l'une des parties de véhicule (2, 3) par le dispositif d'articulation (220), dans laquelle le dispositif d'articulation (220) comprend un corps d'articulation de roulis (240), le corps d'articulation de roulis (240) étant logé à l'intérieur d'un corps de tangage (230) qui est entièrement logé dans un manchon formant enveloppe (227) avec possibilité de rotation autour de l'axe de courbure, le manchon formant enveloppe (227) étant solidaire de l'un des segments d'articulation (111), et dans laquelle le corps d'articulation de roulis (240) est porté par l'une des parties de véhicule,
**caractérisée en ce que**
le corps de tangage (230) comporte des éléments en élastomère (232) répartis sur sa périphérie, au moyen desquels ledit corps de tangage (230) est serré dans le manchon formant enveloppe (227)

2. Articulation selon la revendication 1,
**caractérisée en ce que**
le corps de tangage (230) est disposé mobile en rotation dans le manchon formant enveloppe (227), ledit corps de tangage (230) recevant le corps d'articulation de roulis (240) avec possibilité d'oscillation autour de l'axe longitudinal du véhicule.

3. Articulation selon l'une des revendications précédentes,
**caractérisée en ce que**
le corps de tangage (230) est de configuration anguleuse sur une partie de sa périphérie extérieure, pour recevoir les corps en élastomère (232).

4. Articulation selon l'une des revendications précédentes,
**caractérisée en ce que**
les corps en élastomère (232) présentent un écartement mutuel (232a) dans la direction tangentielle.

5. Articulation selon l'une des revendications précédentes,
**caractérisée en ce que**
le corps d'articulation de roulis (240) est de configuration bombée sur son côté supérieur et sur son côté inférieur.

6. Articulation selon la revendication 5,
**caractérisée en ce que**
le corps d'articulation de roulis (240) comporte un coussin en élastomère (245) sur ses côtés supérieur et inférieur bombés, de sorte que le mouvement de roulis du corps d'articulation de roulis (240) autour de l'axe longitudinal se produit de façon amortie.

7. Articulation selon l'une des revendications précédentes,
**caractérisée en ce que**
le corps d'articulation de roulis (240) comporte, sur son côté avant et sur son côté arrière, une bosse (246) présentant une surface plane, par laquelle ledit corps d'articulation de roulis (240) est en appui contre la paroi intérieure du corps de tangage (230).

8. Articulation selon l'une des revendications précédentes,
**caractérisée en ce que**
le corps d'articulation de roulis (240) comporte des bouts d'axe latéraux (241) pour la liaison avec une partie de véhicule (2).
